(19) Europäisches Patentamt
European Patent Office
Office européen des brevets

(11) **EP 0 509 537 B1**

## (12) EUROPEAN PATENT SPECIFICATION

(45) Date of publication and mention
of the grant of the patent:
**27.08.1997 Bulletin 1997/35**

(51) Int Cl.⁶: **G02B 6/44**, G08B 13/186

(21) Application number: **92106688.2**

(22) Date of filing: **16.04.1992**

(54) **Security system comprising a security fence**

Sicherheitssystem mit Sicherheitszaun

Système de securité comprenant une clôture de sécurité

(84) Designated Contracting States:
**DE GB**

(30) Priority: **16.04.1991 JP 84151/91**
**07.04.1992 JP 84294/92**

(43) Date of publication of application:
**21.10.1992 Bulletin 1992/43**

(73) Proprietors:
- **SUMITOMO ELECTRIC INDUSTRIES, LTD.**
  **Osaka-shi, Osaka 541 (JP)**
- **MATSUSHITA ELECTRIC WORKS, LTD.**
  **Kadoma-shi Osaka 571 (JP)**

(72) Inventors:
- **Ohta, Junichi,**
  **c/o Yokohama Works of Sumitomo**
  **Sakae-ku, Yokohama-shi, Kanagawa (JP)**
- **Wakami, Toshinori,**
  **c/o Yokohama Works of Sumitomo**
  **Sakae-ku, Yokohama-shi, Kanagawa (JP)**
- **Okamoto, Kazuhiro,**
  **c/o Yokohama Works of Sumitomo**
  **Sakae-ku, Yokohama-shi, Kanagawa (JP)**
- **Miki, Ryusuke, c/o Matsuhita Electric Works Ltd.**
  **Kadoma-shi, Osaka (JP)**
- **Kanbe, Yoshiaki,**
  **c/o Matsuhita Electric Works Ltd.**
  **Kadoma-shi, Osaka (JP)**

(74) Representative: **Grünecker, Kinkeldey,**
**Stockmair & Schwanhäusser Anwaltssozietät**
**Maximilianstrasse 58**
**80538 München (DE)**

(56) References cited:
EP-A- 0 196 510          EP-A- 0 246 487
FR-A- 2 418 506          FR-A- 2 494 452
FR-A- 2 551 253          FR-A- 2 583 528
GB-A- 2 039 683          GB-A- 2 123 164
GB-A- 2 158 963          GB-A- 2 174 822
GB-A- 2 179 072          GB-A- 2 187 305
US-A- 4 701 614

- **PATENT ABSTRACTS OF JAPAN vol. 9, no. 179**
  **(M-399)24 July 1985 & JP A 60049200**
- **PATENT ABSTRACTS OF JAPAN vol. 9, no. 246**
  **(P-393)3 October 1985 & JP A 60100003**

EP 0 509 537 B1

## Description

### BACKGROUND OF THE INVENTION

(Field of the Invention)

The present invention relates to a security system according to the preamble of claim 1 using an optical fiber barrier for detecting an invader breaking into an area surrounded by the barrier.

(Prior Art)

A security system according to the preamble of claim 1 is known from GB-A-2 039 683.

JP-A-60-100 003 teaches a monitoring system of abnormality of substance imbedded in ground comprising an optical fiber spirally wound on a spacer body. An abnormality is detected and an according alarm is generated when an external force is exerted on this structure, causing a compression or tension inside the structure and thereby a minute bending of the optical fiber, resulting in an increase in the transmission loss of the fiber.

An optical cable showing an optical fiber accommodated in a groove of a carrier body is known from FR-A-2494452.

Conventionally, as a security system, employed are an infrared camera, a system using infrared rays, or a method of transmitting an optical signal through an optical fiber.

An area which can be watched by one unit of such an infrared camera, a system using infrared rays, or the like, has a limit, resulting in difficulty to watch a wide area. On the other hand, a conventional system using an optical fiber is to detect whether the optical fiber is cut or not by a person. However, in the system, repair has been required to recover the system, and a large amount of optical fiber has also been used so that the person cannot invade an area surrounded by the optical fiber without cutting the optical fiber.

In order to solve the above problems, the present invention provides a security system according to claim 1.

Preferred embodiments of the invention are set out in the dependent claims.

### BRIEF DESCRIPTION OF THE DRAWINGS

Fig. 1 shows an explanatory view of the whole configuration of the present invention;
Fig. 2 shows a sectional view of an optical cable applied to the present Invention;
Fig. 3 shows a sectional view of another optical cable applied to the present invention;
Figs. 4a and 4b show sectional views of an optical fiber applied to the present invention, respectively;
Fig. 5 shows a view for explaining the principle of the present invention;
Figs. 6 and 7 shows views showing the measured values of the results obtained by the examples of the present invention, respectively; and
Fig. 8 shows a sectional view of an optical fiber applied to the present invention.

### DETAILED DESCRIPTION OF THE PREFERRED EMBODIMENTS

Embodiments of the present invention will be described with reference to the accompanying drawings.

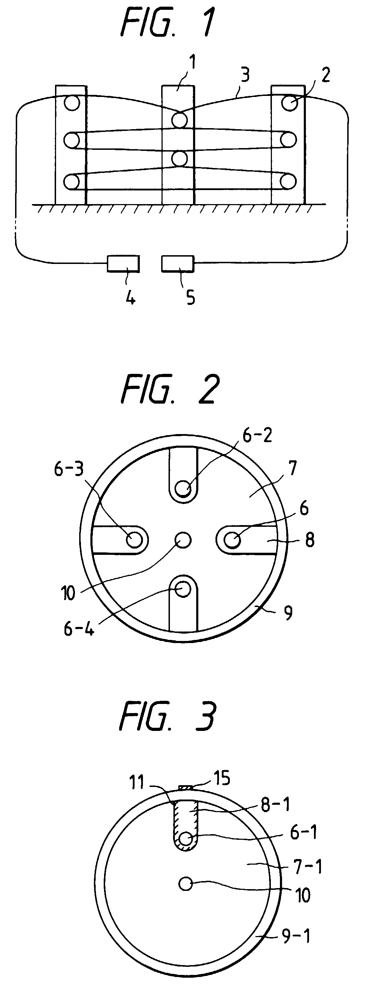

In Figs. 1 and 2, an optical cable 3 is provided with gaps 8 therein, and accommodates optical fibers 6, 6-2, 6-3, and 6-4 with an excessive length in the gaps 8, respectively. A plurality of supports 1 are provided with a plurality of mandrels 2 in such a manner that one or more lines of the optical cable 3 are arranged between the supports 1 through the mandrels 2 while winding around the mandrels 2 to form a fence. A light transmitter and receiver 4 and 5 applies an incident light to one end of the optical cable 3, and receives the light from the other end thereof, respectively.

The optical cable 3 is formed in such a manner that the optical fiber 6 is received in the gap 8 which is in the form of a linear or spiral groove provided in a surface of a stripe body 7, and a coating layer 9 is provided over the optical fiber 6.

The stripe body 7 is made of reinforced plastics including glass fibers, but a copper wire 10 may be used at a center of the stripe body 7 for increasing tensile strength.

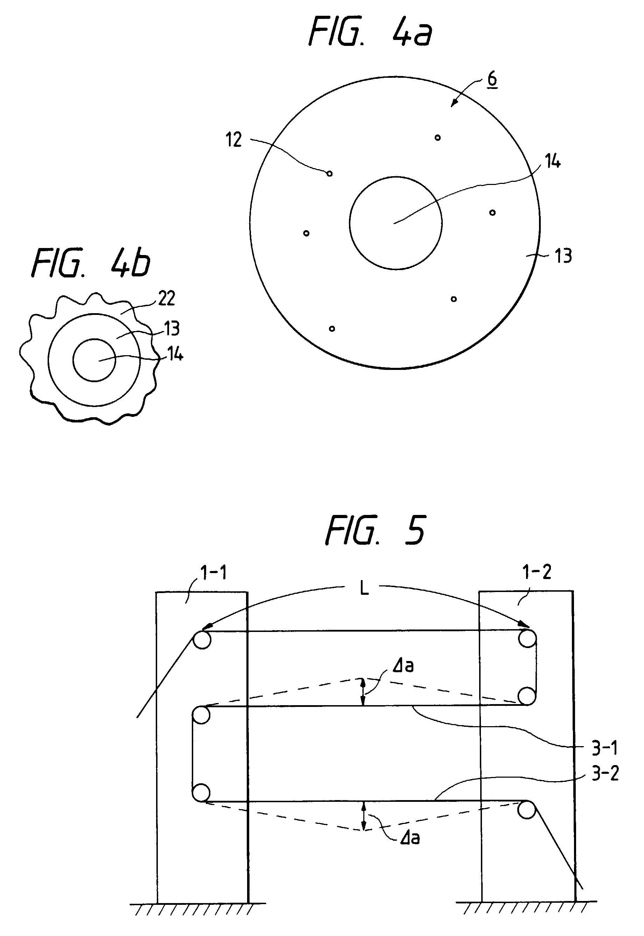

The coating layer 9 is made of resin such as polyethylene, nylon, or the like. As shown in Fig. 3, unevenness 11 is provided on an inner wall of the gap 8 so that microbent is easily generated in the optical fiber 6 when tension is exerted on the optical cable 3 which is bent by the mandrels 2.

It is preferable to provide three or more grooves 8 in one stripe body, so that any one of the optical fibers comes outside the bending radius of the optical cable 3 when the optical cable 3 is bent.

In an alternative method, as shown in Fig. 3, a marking or a structural groove location mark 15 is provided on a coating layer 9-1 at the position of a groove 8-1, whereby a cable is positioned so that the groove 8-1 is allowed to come to the outside of each mandrel 2.

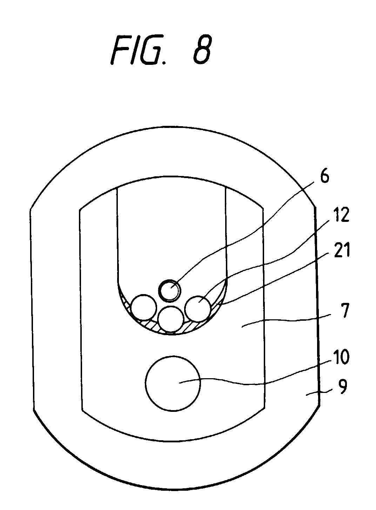

Further, as shown in Fig. 4a, the optical fiber 6 is made such that solid particles 12 are mixed in a coating 13 of a glass fiber 14 so that microbent is generated easily. The solid particles 12 are made of spherical glass, fluorine resin, alumina, or the like. The size of the solid particles 12 is approximately 30 to 50μm, and the number thereof included in the coating 13 is approximately 50/mm. The same effect can be obtained if the solid particles 12 are attached to the outer surface of the coating 13 through an adhesive 21 as shown in Fig. 8, or if unevenness 22 is provided on the outer surface of the coating 13 as shown in Fig. 4b.

Similar to the coating layer 9, resin is used for the coating 13. In order to make the optical fiber 6 have excessive length, it is necessary to make the gap 8 larger than the outer diameter of the optical fiber 6. Alternatively, the gap 8 may be shaped so as to be elongated so that the excessive length of the optical fiber 6 may be given by the depth.

If a person intends to enter an area encircled by optical cables 3 arranged like a fence through a gap between optical cables 3, it is necessary to enlarge the distance between the optical cables 3 as shown in Fig. 5. Let the interval between supports 1-1 and 1-2 be L and let the enlargement of the distance between the optical cables 3-1 and 3-2 be $\Delta a$ per optical cable, then the extension $\Delta L$ is expressed as in the following Equation (1).

$$\Delta L = ( \sqrt{L^2 + 4\Delta a^2} - L )/L \qquad (1)$$

On the other hand, the minimum length $L_{MIN}$ which the optical fiber 6 can take in the gap 8 of the cable 3 is determined by the structure of the cable 3. For example, in a case of an optical fiber 6 in a groove 8 of a stripe body 7 longitudinally having a spiral groove, the minimum length $L_{MIN}$ can be expressed by the following Equation (2) when the length of the cable 3, the pitch of the spiral groove, and the distance from the cable center to the groove bottom are represented by Lca, P and b, respectively.

$$L_{MIN} = L_{ca}\sqrt{P^2 + 4\pi^2 b^2} /P \qquad (2)$$

In the case of a linear groove, $L_{MIN}$ becomes equal to $L_{ca}$.

Further, discussion will be made on the case where an excessive length is given to an optical fiber received in the groove 8 so that the optical fiber is longer than $L_{MIN}$ by $\Delta K$. In this condition, the optical fiber 6 exists freely within the groove 8 without being subjected to lateral pressure. Then, if tension is applied to the cable by $\Delta L$, the optical fiber 6 still has excessive length in a range of $\Delta L < \Delta K$, while lateral pressure F is applied to the optical fiber 6 from the groove bottom when condition becomes $\Delta L > \Delta K$. The lateral pressure F is expressed by the following Equation (3).

$$F = ES \frac{\Delta L}{L_{MIN}} \qquad (3)$$

where, E, S and R represent the Young's modulus of the optical fiber 6, the sectional area of the optical fiber 6, and the radius of curvature of the optical fiber 6, respectively, the radius of curvature of the optical fiber 6 being determined by the spiral groove and satisfying the Equation of $R = b + (P/2\pi)^2/b$ . Accordingly, the lateral pressure according to the present invention occurs with a threshold.

In the case where the radius of curvature R of the optical fiber 6 which is determined by the spiral groove is large, or in the case of a linear groove, there is a case where the lateral pressure effect cannot be sufficiently obtained. At this time, if mandrels 2 each having a small radius of curvature are attached to the supports 1 and the optical cable 3 winds around the mandrels 2 so that the groove 8 is directed toward the outer circumference of each of the mandrels 2, the lateral pressure effect becomes so large that optical fiber 6 is subjected to large lateral pressure to generate microbent, thereby increasing the transmission loss of an optical signal.

On the other hand, in the case where the radius of curvature of each mandrel 2 is larger or in the case of using no mandrel 2, the force exerted on the cable 3 in a certain section may act onto the optical fiber 6 between the supports 1 in the adjacent section so that sufficient lateral pressure cannot be exerted onto the optical fiber 6 in the section in question. As measures to this, it is effective to provide such a structure that the optical fiber 6 is fixed with resin or the like in the groove 8 of the cable 3 at intervals substantially equal to those of the supports (preferably, at positions before or after a little from the respective supports 1.

The optical cables 3 shown in Figs. 2 and 3 are a concentric type that the copper wire 10 is positioned at the center of the cable, however, it may be of an eccentric type that the copper wire is displaced from the center of the cable, as shown in Fig. 8.

(Example 1)

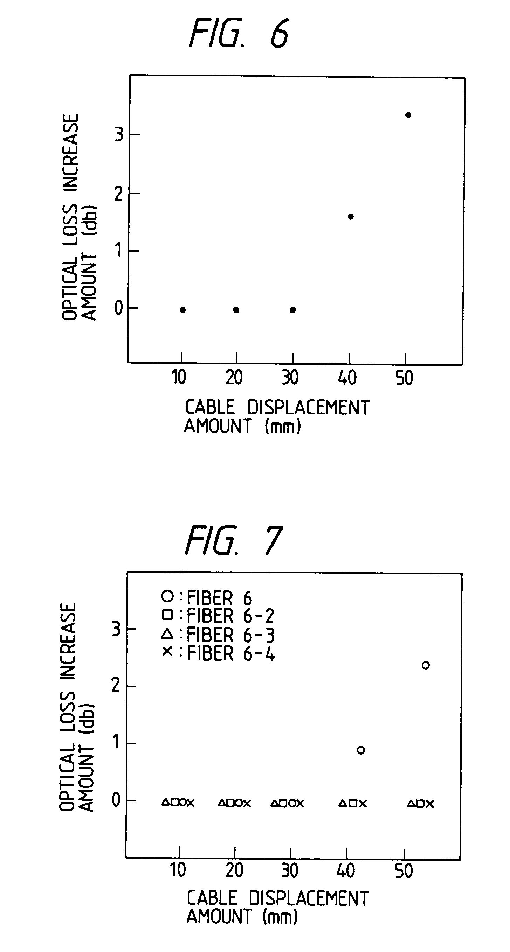

In a cable structure shown in Fig. 3, an optical fiber 6-1 with an excessive length of 0.05% of the minimum length thereof was received in a spiral groove 8-1 to thereby form a cable 3. The cable 3 was attached on supports 1 provided at intervals of 2 m through mandrels 2 of 35 mm in diameter attached to the supports 1 in such a manner that the groove 8 was directed toward the outer circumference of each mandrel 2. Light of 1.55μm in wavelength was made incident into the optical fiber 6, and the cable 3 at the intermediate portion between the supports 1 was displaced by from 0 to 50mm while the quantity of light reception was being detected at the other end of the optical fiber 6. As shown in Fig. 6, the loss caused by the displacement of the cable 3 and the microbent in the optical fiber due to the displacement of the cable 3 did not change to increase in a range of 0 to 35mm of the displacement, while it showed a tendency of increase relative to the displacement beyond the above range.

(Example 2)

Four optical fibers 6, 6-2, 6-3 and 6-4 were received in respective spiral grooves under the conditions similar to those in the Example 1 to form a cable 3 as shown in Fig. 2, and similar measurement was performed. As a result, as shown in Fig. 7, the optical fiber 6 had a tendency of increase similarly to the Example 1 while no increase of loss occurred in the other three optical fibers 6-2, 6-3 and 6-4. This was considered that only the optical fiber 6 was attached in the radially outer side of the mandrel 2.

In the security system according to the present invention, the change of loss shows a behavior with a threshold depending on the force exerted to the cable or the quantity of expansion of the distance between the cable portions, because there exist a case where the optical fiber is subjected to lateral pressure and a case where it is subjected to no lateral pressure. Accordingly, in only the case where sufficient large force is exerted the system can perform detection of the optical loss while it does not operate against a fine displacement of the cable due to wind pressure, temperature change, or the like.

**Claims**

1. Security system comprising:
   an optical cable (3), a plurality of spaced apart supports (1) supporting one or more lengths of said cable spanned between them, a light transmitter (4) for applying an incident light to one end of said optical cable (3), and a light receiver (5) for receiving the light applied to said optical cable (3) from the other end of said optical cable (3) to detect the transmission loss of an optical signal, wherein said optical cable comprises at least one optical fiber (6) and is formed so that when predetermined tension is applied to said optical cable (3), a predetermined transmission loss of the optical signal is generated in said at least one optical fiber (6), said optical cable (3) having a core body with at least one groove (8) formed in the surface thereof, with each of said one or more optical fibers being in a respective one of said one or more grooves
   **characterized in that**
   the plurality of supports (1) have mandrels (2), wherein said one or more lengths of said optical cable (3) are attached at said supports (1) by means of said mandrels (2) so as to provide a fence and in that the at least one fibre is accommodated in the groove with an excess length.

2. A security system as claimed in claim 1, wherein said optical cable (3) comprises a stripe body (7) in a surface of which said at least one groove (8) is formed and a cable coating layer (9) provided over said optical fiber, wherein said at least one groove is linear.

3. A security system as claimed in claim 1, wherein said optical cable (3) comprises a stripe body (7) in a surface of which said at least one groove (8) is formed and a cable coating layer (9) provided over said optical fiber, wherein said at least one groove is arranged spirally.

4. A security system as claimed in claim 1, wherein said at least one groove has an uneven surface.

5. A security system as claimed in claim 1, wherein three or more linear grooves are longitudinally formed in each of three portions of said optical cable.

6. A security system as claimed in claim 2, wherein three or more spiral grooves are longitudinally formed in each of three portions of said optical cable.

7. A security system as claimed in claim 2, wherein said at least one groove (8-1) comprises one linear groove formed in one portion of said optical cable (3) and a groove location mark (15) is provided on said cable coating layer (9-1) at a position of said linear groove.

8. A security system as claimed in claim 3, wherein said at least one groove (8-1) comprises one spiral groove formed in one portion of said optical cable, and a groove location mark (15) is provided on said cable coating layer (9-1) at a position of said spiral groove.

9. A security system as claimed in claim 7, wherein said optical cable (3) is arranged so that the position of said groove location mark (15) is adjusted to make said groove come to the outside with respect to the radial direction of said mandrel (2).

10. A security system as claimed in claim 8, wherein said optical cable (3) is arranged so that the position of said groove location mark (15) is adjusted to make said groove come to the outside with respect to the radial direction of said mandrel.

11. A security system as claimed in claim 1, wherein said optical fiber (6) comprises a glass fiber (14) and a fiber coating layer (13) surrounding said glass fiber, said fiber coating layer containing particles (12) therein.

12. A security system as claimed in claim 1, wherein said optical fiber (6) comprises a glass fiber (14) and a fiber coating layer (13) covering said glass fiber, said fiber coating layer having unevenness (22) on an outer surface thereof.

13. A security system as claimed in claim 1, wherein said optical fiber (6) is fixed in said at least one groove at intervals substantially the same as those of said supports.

**Patentansprüche**

1. Sicherheitssystem mit:
einem optischem Kabel (3), einer Vielzahl von beabstandeten Halterungen (1), die eine oder mehrere Strecken des sich dazwischen erstreckenden Kabels haltern, einem Lichtsender (4) zum Anwenden von Einfallslicht auf ein Ende des optischen Kabels (3), und einem Lichtempfänger (5) zum Empfang des auf das optische Kabel (3) von dem anderen Ende des optischen Kabels (3) angewendeten Lichts zur Detektion des Übertragungsverlusts eines optischen Signals, wobei das optische Kabel wenigstens eine optische Faser (6) umfaßt und so ausgebildet ist, daß bei Anwendung einer vorbestimmten Spannung auf das optische Kabel (3) ein vorbestimmter Übertragungsverlust des optischen Signals in der wenigstens einen optischen Faser (6) erzeugt wird, wobei das optische Kabel (3) einen Kernkörper mit wenigstens einer in seiner Oberfläche ausgebildeten Rille (8) aufweist, wobei jede der einen oder mehreren optischen Fasern sich in einer entsprechenden Rille der wenigstens einen oder mehreren Rillen befindet,
**dadurch gekennzeichnet,** daß
die Vielzahl von Halterungen (1) Dorne (2) aufweist, wobei die eine oder mehreren Strecken des optischen Kabels (3) an den Halterungen (1) mittels der Dorne (2) derart angebracht sind, daß sie einen Zaun schaffen, und daß die wenigstens eine Faser mit einer Überschußlänge in der Rille aufgenommen ist.

2. Ein Sicherheitssystem gemäß Anspruch 1, wobei das optische Kabel (3) einen Streifenkörper (7) umfaßt, in dessen Oberfläche wenigstens eine Rille (8) ausgebildet ist, sowie eine Kabelüberzugsschicht (9), die über der optischen Faser vorgesehen ist, wobei die wenigstens eine Rille linear ist.

3. Ein Sicherheitssystem gemäß Anspruch 1, wobei das optische Kabel (3) einen Streifenkörper (7) umfaßt, in dessen Oberfläche wenigstens eine Rille (8) ausgebildet ist, sowie eine über der optischen Faser vorgesehene Kabelüberzugsschicht (9), wobei die wenigstens eine Rille spiralförmig angeordnet ist.

4. Ein Sicherheitssystem gemäß Anspruch 1, wobei die wenigstens eine Rille eine unebene Oberfläche aufweist.

5. Ein Sicherheitssystem gemäß Anspruch 1, wobei drei oder mehr lineare Rillen in Längsrichtung in jedem von drei Teilen des optischen Kabels ausgebildet sind.

6. Ein Sicherheitssystem gemäß Anspruch 2, wobei drei oder mehr spiralförmige Rillen in Längsrichtung in jedem von drei Teilen des optischen Kabels ausgebildet sind.

7. Ein Sicherheitssystem gemäß Anspruch 2, wobei die wenigstens eine Rille (8-1) eine in einem Teil des optischen Kabels (3) ausgebildete lineare Rille umfaßt und wobei eine Rillenlagenmarkierung (15) an der Kabelüberzugsschicht (9-1) an einer Position der linearen Rille vorgesehen ist.

8. Ein Sicherheitssystem gemäß Anspruch 3, wobei die wenigstens eine Rille (8-1) eine in einem Teil des optischen Kabels ausgebildete spiralförmige Rille umfaßt, und wobei eine Rillenlagenmarkierung (15) an der Kabelüberzugsschicht (9-1) an einer Position der spiralförmigen Rille vorgesehen ist.

9. Ein Sicherheitssystem gemäß Anspruch 7, wobei das optische Kabel (3) derart angeordnet ist, daß die Position der Rillenlagenmarkierung (15) so eingestellt ist, daß bewirkt wird, daß die Rille an der Außenseite in bezug auf die radiale Richtung des Dorns (2) zu liegen kommt.

10. Ein Sicherheitssystem gemäß Anspruch 8, wobei das optische Kabel (3) derart angeordnet ist, daß die Position der Rillenlagenmarkierung (15) so eingestellt ist, daß bewirkt wird, daß die Rille an der Außenseite in bezug auf die radiale Richtung des Kerns zu liegen kommt.

11. Ein Sicherheitssystem gemäß Anspruch 1, wobei die optische Faser (6) eine Glasfaser (14) und eine Faserüberzugsschicht (13), die die Glasfaser umgibt, umfaßt, wobei die Faserüberzugsschicht Teilchen (12) darin enthält.

12. Ein Sicherheitssystem gemäß Anspruch 1, wobei die optische Faser (6) eine Glasfaser (14) und eine Faserüberzugsschicht (13), die die Glasfaser abdeckt, umfaßt, wobei die Faserüberzugsschicht Unebenheit (22) auf ihrer äußeren Oberfläche aufweist.

13. Ein Sicherheitssystem gemäß Anspruch 1, wobei die optische Faser (6) an der wenigstens einen Rille unter Abständen fixiert ist, die im wesentlichen gleich sind wie jene der Halterungen.

## Revendications

1. Système de sécurité comprenant un câble optique (3), une pluralité de supports espacés (1) supportant une ou plusieurs longueurs dudit câble qui s'étendent entre eux, un émetteur de lumière (4) pour appliquer une lumière incidente à une extrémité dudit câble optique (3) et un récepteur de lumière (5) pour recevoir la lumière appliquée audit câble optique (3) depuis l'autre extrémité dudit câble optique afin de détecter la perte de transmission d'un signal optique, système dans lequel ledit câble optique comprend au moins une fibre optique (6) et est formé de telle façon que, lorsqu'une tension prédéterminée est appliquée audit câble optique (3), une perte prédéterminée de transmission du signal optique est générée dans ladite au moins une fibre optique (6), ledit câble optique (3) possédant une âme présentant au moins une gorge (8) formée dans sa surface, chacune desdites une ou plusieurs fibres optiques se trouvant dans une gorge respective de ladite ou desdites gorges,

   système caractérisé en ce que la pluralité de supports (1) possède des mandrins (2), où ladite ou lesdites longueurs dudit câble optique (3) sont fixées sur lesdits supports (1) au moyen desdits mandrins (2) de façon à constituer une clôture et en ce que au moins une fibre est logée dans la gorge avec une longueur en excès.

2. Système de sécurité selon la revendication 1, dans lequel ledit câble optique (3) comprend un corps en bande (7) sur la surface duquel ladite au moins une gorge (8) est formée et une couche de revêtement de câble (9) prévue sur ladite fibre optique, système dans lequel ladite au moins une gorge est linéaire.

3. Système de sécurité selon la revendication 1, dans lequel ledit câble optique (3) comprend un corps en bande (7) à la surface duquel ladite au moins une gorge (8) est formée et une couche de revêtement de câble (9) prévue sur ladite fibre optique, système dans lequel ladite au moins une gorge est agencée en spirale.

4. Système de sécurité selon la revendication 1, dans lequel ladite au moins une gorge possède une surface irrégulière.

5. Système de sécurité selon la revendication 1, dans lequel trois ou plus de trois gorges linéaires sont formées, de façon longitudinale, dans chacune de trois parties dudit câble optique.

6. Système de sécurité selon la revendication 2, dans lequel trois ou plus de trois gorges en spirale sont formées, de façon longitudinale, dans chacune de trois parties dudit câble optique.

7. Système de sécurité selon la revendication 2, dans lequel ladite au moins une gorge (8-1) comprend une gorge linéaire formée dans une partie dudit câble optique (3) et un repère de position de gorge (15) est prévu sur ladite couche de revêtement de câble (9-1) sur une position de ladite gorge linéaire.

8. Système de sécurité selon la revendication 3, dans lequel ladite au moins une gorge (8-1) comprend une gorge à spirale formée dans une partie dudit câble optique et un repère de position de gorge (15) est prévu sur ladite couche de revêtement de câble (9-1) sur une position de ladite gorge en spirale.

9. Système de sécurité selon la revendication 7, dans lequel ledit câble optique (3) est agencé de telle façon que la position dudit repère de position de gorge (15) soit réglée pour faire sortir ladite gorge à l'extérieur par rapport à la direction radiale dudit mandrin (2).

10. Système de sécurité selon la revendication 8, dans lequel ledit câble optique (3) est agencé de telle façon que la position dudit repère de position de gorge (15) soit réglée pour faire sortir ladite gorge à l'extérieur par rapport à la direction radiale dudit mandrin.

11. Système de sécurité selon la revendication 1, dans lequel ladite fibre optique (6) comprend une fibre de verre (14) et une couche de revêtement de fibre (13) entourant ladite fibre de verre, ladite couche de revêtement de fibre contenant des particules (12).

12. Système de sécurité selon la revendication 1, dans lequel ladite fibre optique (6) comprend une fibre de verre (14) et une couche de revêtement de fibre (13) couvrant ladite fibre de verre, ladite couche de revêtement de fibre présentant des irrégularités (22) sur sa surface externe.

13. Système de sécurité selon la revendication 1, dans lequel ladite fibre optique (6) est fixée dans ladite au moins une gorge selon des intervalles pratiquement identiques à ceux desdits supports.

FIG. 1

FIG. 2

FIG. 3

FIG. 4a

FIG. 4b

FIG. 5

## FIG. 6

## FIG. 7

# FIG. 8